# FASCICULE DE BREVET EUROPEEN

(11) **EP 1 165 618 B1**
(45) Date de publication et mention de la délivrance du brevet: **19.03.2003**
(21) Numéro de dépôt: 00901672.6
(22) Date de dépôt: 28.01.2000
(51) Int. Cl.: C08B 7/00, C08B 3/06

(54) **PROCEDE DE PREPARATION DE DERIVES SULFOACETATES DE CELLULOSE ET PRODUITS ET MELANGES CORRESPONDANTS**
VERFAHREN ZUR HERSTELLUNG VON SULFOACETAT-CELLULOSEDERIVATEN UND PRODUKTE UND MISCHUNGEN
METHOD FOR PRODUCING CELLULOSE SULFOACETATE DERIVATIVES AND PRODUCTS AND MIXTURES THEREOF

(30) Priorité: 29.01.1999 FR 9901049
(43) Date de publication de la demande: 02.01.2002
(73) Titulaire: INSTITUT NATIONAL DE LA RECHERCHE AGRONOMIQUE (INRA), 75007 Paris Cédex 07 (FR)
(72) Inventeur: CHAUVELON, Ga[lle, F-49170 Saint-Georges/Loire (FR); SAULNIER, Luc, F-44000 Nantes (FR); BULEON, Alain, F-44240 La Chapelle/Erdre (FR); THIBAULT, Jean-François, F-44700 Orvault (FR)
(74) Mandataire: Michelet, Alain
(86) Numéro de dépôt international: FR0000205
(87) Numéro de publication internationale: WO00044791

(56) Documents cités:
- GB-A- 1 177 480
- US-A- 3 075 962
- US-A- 3 075 963
- OTT & SPURLIN: "cellulose and cellulose derivatives part II" 1963 , INTERSCIENCE PUBLISHERS INC. , USA XP002115074 Chapter IX, H.M. Spurlin: Derivatives of Cellulose page 775 -page 777
- CHEMICAL ABSTRACTS, vol. 97, no. 10, 6 septembre 1982 (1982-09-06) Columbus, Ohio, US; abstract no. 72939, "Preparation and study of the properties of primary soluble cellulose acetates with low degree of substitution" XP002115075 cité dans la demande & AIKHODZHAEV B. I. ET AL.: VYSOKOMOL. SOEDIN., SER. A., vol. 24, no. 6, 1982, pages 1317-1321,

## Description

La présente invention concerne un procédé d'obtention directe de dérivés sulfo-acétates ainsi que des dérivés sulfo-acétates susceptibles d'être obtenus par ce procédé.

Les acétates de cellulose sont les dérivés cellulosiques les plus couramment fabriqués industriellement.

L'acétylation de la cellulose n'est actuellement pas spécifique et généralement seuls les triacétates cellulosiques sont obtenus de façon directe.

Aucun contrôle du taux d'acétylation n'est donc possible au cours de la réaction, ce qui n'est pas sans poser un problème majeur puisqu'il est admis en général que la solubilité et les propriétés du dérivé obtenu sont directement liées au degré d'acétylation de la cellulose (nombre de fonctions hydroxyles acétylées par unité d'anhydroglucose).

Dans la plupart des techniques de l'art antérieur l'obtention d'acétate de cellulose hydrosoluble, habituellement d'un degré d'acétylation compris entre 0,5 et 1, passe par la formation d'un triacétate de cellulose suivi d'une désacétylation par acétolyse, par exemple, selon Tanghe L. J., et al (1963): « Cellulose acétate » dans Methods in Carbohydrate Chemistry. Vol. 3, Whistler R. L. (ed). 193-212. Academic Press, New York ou selon Samios E., et al., (1997) : « Preparation, characterization and biodegradation studies on cellulose acetates with varying degrees of substitution », Polym., 38 (12) : 3045-3054. Ladite désacétylation peut être effectuée encore par méthanolyse, par exemple, selon Buchanan C. M., (1991) : « Preparation and characterization of cellulose monoacétates : the relationship between structure and water solubility », Macromol., 24 : 3060-3064.

Ces méthodes antérieures entraînent un surcoût considérable - temps, consommation de réactifs - qui ne permet pas d'envisager une commercialisation des acétates cellulosiques hydrosolubles. Par ailleurs, au cours des étapes d'acétylation et de désacétylation il se produit une forte dépolymérisation de ces dérivés ce qui affecte leurs propriétés rhéologiques.

Celtes selon Aikhodzhaev B. I., et al., (1982) : « Preparation and study of the properties of primary soluble cellulose acétates with low degree of substitution », il serait possible de préparer directement de l'acétate de cellulose hydrosoluble. Mais cet enseignement est muet quant à l'obtention de dérivés sulfatés et les conditions opératoires décrites semblent conduire à une forte dépolymérisation de la cellulose du fait de la présence d'acide sulfurique en quantité considérable.

La présente invention vise quant à elle un procédé de préparation directe de dérivés acétates de cellulose sulfatés hydrosolubles en ce sens qu'elle ne comprend pas d'étape de désacétylation préalable de triacétates de cellulose et ce pratiquement sans dépolymérisation de la chaîne de cellulose.

En particulier, l'invention concerne un procédé de préparation de dérivés acétates de cellulose sulfatés hydrosolubles dont le degré de polymérisation est égal à au moins 0,8 fois celui de la cellulose initiale.

La présente invention a trait également à des sulfo-acétates de cellulose susceptibles d'être obtenus par un tel procédé et qui présentent notamment les avantages et / ou caractéristiques suivantes :
- des degrés d'acétylation variables, selon l'origine de la cellulose du matériel cellulosique de départ ;
- un degré de sulfatation de 0,6 à 0,2 (selon la durée de la réaction), étant d'environ 0,3 dans les conditions de réaction généralement utilisées ;
- un degré de polymérisation contrôlé ;
- une excellente solubilité dans l'eau et les solvants polaires, et des propriétés rhéologiques avantageuses du fait de leur haute viscosité, similaires à celles de polymères associatifs.
- une rétention d'eau en présence de sel : ils gonflent jusqu'à 190 ml / g mais restent insolubles.

La présente invention va maintenant être décrite de manière détaillée dans ces objets et autres caractéristiques et à l'aide d'exemples donnés à titre purement illustratif et non limitatif en référence aux Dessins annexés dans lesquels
la Figure 1 représente un graphique illustrant un exemple d'optimisation de la quantité d'anhydride acétique (en moles d'anhydride acétique par mole d'anhydroglucose) pour un temps d'estérification de 30 min et
la Figure 2 représente un graphique illustrant un exemple d'optimisation du temps d'estérification de la cellulose pour une quantité d'anhydride acétique de 3,2 moles / mole d'anhydroglucose.

La présente invention a plus précisément pour objet un procédé de préparation directe d'un mélange de dérivés sulfo-acétates de cellulose hydrosolubles par estérification d'un matériel cellulosique, caractérisé en ce qu'il comprend les étapes consistant à
(i) mettre en suspension le matériel cellulosique dans une solution d'acide acétique glacial, et éliminer l'excédent d'acide acétique ;
(ii) mettre en suspension le matériel cellulosique gonflé d'acide acétique dans une solution d'acide sulfurique dans l'acide acétique glacial et
(iii) faire réagir le matériel cellulosique en ajoutant l'anhydride acétique.

De préférence, le procédé selon l'invention comprend une étape (iv) au cours de laquelle la réaction de l'étape (iii) est stoppée par ajout d'une solution aqueuse d'acide acétique.

Selon un mode de réalisation préféré le procédé selon l'invention comprend les étapes consistant à :
(v) centrifuger éventuellement le mélange de l'étape (iv) mentionnée ci-dessus ;
(vi) laver et éliminerle culot éventuellement obtenu ;
(vii) ajouter de l'eau afin de faire précipiter les triacétates de cellulose éventuellement formés ;
(viii) centrifuger et éliminer le culot ;
(ix) neutraliser le surnageant en refroidissant éventuellement ;
(x) dialyser le précipité obtenu et
(xi) lyophiliser la solution.

Dans ce mode de réalisation, il est avantageux qu'à l'étape (vi) le culot éventuellement obtenu soit lavé à trois reprises à l'acide acétique puis à trois reprises à l'eau désionisée.

Il est également préférable de placer, à l'étape (vii), le mélange à une température de 4°C à 25°C, de préférence environ 4 °C, pendant une durée de 1 h à 24 h, de préférence environ 16 h.

Toujours dans ce mode de réalisation il est souhaitable que l'étape (ix) soit réalisée par addition lente d'une solution d'hydroxyde de sodium jusqu'à l'obtention d'un pH d'environ 7,5.

De même il est avantageux que cette même étape (ix) soit réalisée en refroidissant le mélange dans un bain de glace et de suivre le pH en continu de manière à ce que le pH ne dépasse pas 10, de préférence environ 7,5.

Selon un autre mode de réalisation également préféré, l'étape (x) du procédé conforme à la présente invention peut être remplacée par plusieurs lavages par des solutions éthanoliques constituées avantageusement par de l'éthanol à 60 %, 70 %, 80 % et 100 %. L'étape (xi) est alors remplacée par un séchage du précipité obtenu, la température étant d' 20 °C à 60 °C, de préférence environ 40 °C.

Selon l'invention, le procédé présente en outre les caractéristiques complémentaires et / ou alternatives suivantes :
- la quantité d'anhydride acétique choisie est de 3 à 7 moles / mole d'anhydroglucose, de préférence d'environ 3,2 moles / mole d'anhydroglucose,
- le temps d'estérification choisi est de 1 min à 60 mn, de préférence 20-30 min,
- la température d'estérification choisie est d' 25 °C à 80°C, de préférence environ 40°C.
- le matériel cellulosique de départ est choisi dans le groupe comprenant des résidus cellulosiques purifiés à partir de co-produits issus de l'agriculture et en particulier des sons de céréales, par exemple blé et maïs, mais également des celluloses de bois, par exemple de pin, ou de la cellulose microcristalline du commerce du type cellulose Avicel par exemple. Le procédé selon l'invention montre ainsi sa faisabilité sur des sources de cellulose différentes et donc de pureté diverses, contenant notamment de 60 % à 100 % de cellulose.
- dans le cas où la cellulose provient de sons de céréales, le matériel cellulosique de départ est soumis à un traitement préalable d'extraction des polymères non cellulosiques par voie acide ou alcaline ; mieux encore, ledit traitement préalable est réalisé en présence d'un agent réducteur tel que le borohydrure de sodium.

La présente invention a également pour objet un mélange de dérivés sulfo-acétates de cellulose hydrosolubles susceptible d'être obtenu par le procédé selon l'invention et caractérisé en ce que lesdits dérivés présentent un degré d'acétylation de préférence d'environ 1,5 à environ 2,4. Les groupements acétyles des sulfo-acétates participent probablement à des interactions interchaînes qui peuvent augmenter la viscosité de manière très importante.

De préférence les dérivés sulfo-acétates conformes à la présente invention présentent un degré de sulfatation d' 0,2 à 0,6, de préférence d'environ 0,3.

Les dérivés sulfo-acétates selon l'invention présentent encore les caractéristiques et / ou avantages complémentaires ou alternatifs suivants :
- seul est sulfaté le carbone en position 6 des cycles d'anhydroglucose desdits dérivés ; ainsi les sulfates augmentent le caractère hydrophile de la cellulose et tendent à rendre le dérivé hydrosoluble.
- lesdits dérivés sont obtenus à partir de cellulose de degré de polymérisation moyen viscosimétrique déterminé dans la cupriéthylènediamine à 25 °C d' 210 à 1590.
- la viscosité intrinsèque du mélange desdits dérivés, déterminée par extrapolation à concentration nulle de la viscosité réduite mesurée dans l'eau à 25 °C est d' 600 à 1500 ml / g et comparable à celle de la carboxyméthylcellulose.
- lesdits dérivés présentent des propriétés de rétention d'eau telles qu'en présence de sels ils gonflent, jusqu'à 200 ml / g mais restent insolubles.
- le mélange desdits dérivés est exempt de dérivés triacétylés qui ont été éliminés au cours du procédé.
- lesdits dérivés sont thermiquement stables pendant 16 h à 80°C, malgré la présence des groupements sulfates.
- Le mélange desdits dérivés peut se présenter sous la forme d'un gel thermoréversible et partiellement thixotrope.

### Exemple 1 : Obtention de sulfo-acétates de cellulose

### 1.1. Les celluloses de départ

Les différentes celluloses ont été obtenues à partir d'un son de blé, d'un son de maïs et d'une cellulose commerciale (cellulose Avicel, vendue par Fluka). Dans le Tableau I ci-dessous sont décrits deux sons qui ont subis divers traitements d'extraction des polymères non cellulosiques (hétéroxylanes et lignine) par voie acide ou alcaline. Les conditions seront décrites ci-dessous.

### 1.1.1. Obtention des résidus cellulosiques

### 1.1.1.1. Mode opératoire 1

Le son de blé est mis en suspension (50 g /l) dans une solution d'acide sulfurique (0,5 mol / l) en présence de quelques gouttes d'octanol. La suspension est agitée pendant 12 h à 110 °C dans un bain d'huile, et à reflux. Le résidu est récupéré par filtration (porosité < 15 µm) et lavé avec de l'eau désionisée jusqu'à ce que le pH des eaux de lavage atteigne 5. Le résidu cellulosique est finalement lavé à l'éthanol (3 fois, 500 ml) puis à l'acétone (3 fois, 500 ml) et est enfin séché à l'étuve ventilée à 40 °C pendant 16 h.

### 1.1.1.2 Mode opératoire 2

Le son de blé de départ ou traité par l'acide sulfurique (mode opératoire 1) est agité et chauffé dans de l'eau désionisée (67 g / l) jusqu'à ce que la température atteigne 70 °C. L'acide acétique glacial (12 ml / l) et le chlorite de sodium monohydraté (17 g / l) sont alors ajoutés. Après 1 h à 70 °C, la même quantité d'acide acétique glacial et de chlorite de sodium est ajoutée et le mélange est agité pendant 1 h. Le résidu est récupéré par filtration (porosité < 15 µm) et est lavé avec de l'eau désionisée jusqu'à ce que le pH des eaux de lavage atteigne 5. Le résidu délignifié est ensuite lavé à l'éthanol (3 fois, 500 ml) puis à l'acétone (3 fois, 500 ml) et est enfin séché à l'étuve ventilée à 40 °C pendant 16 h.

### 1.1:1.3 Mode opératoire 3

Les sons sont mis en suspension dans une solution d'hydroxyde de potassium, 1,5 mol/l pour le son de maïs et 2 mol /l pour le son de blé. La suspension est laissée pendant 2 h à 100 °C avec une agitation manuelle périodique. Le résidu est récupéré après centrifugation (15000 g, 30 min) et est lavé avec de l'eau désionisée (3 fois , 600 ml). Le pH est ajusté à 6 avec de l'acide acétique glacial et le résidu est lavé à l'éthanol à 95 % (3 fois, 500 ml) puis à l'acétone (3 fois, 500 ml) et est enfin séché à l'étuve ventilée à 40 °C pendant 16 h. Le résidu est alors broyé et tamisé (diamètre des particules < 0,5 mm).

### 1.1.1.4. Mode opératoire 4

Les sons sont mis en suspension dans une solution d'hydroxyde de potassium 1,5 mol / l pour le son de maïs et 2 mol / l pour le son de blé, à laquelle on ajoute 10 g/l de borohydrure de sodium. La suspension est laissée pendant 2 h à 100 °C avec une agitation manuelle périodique. Le résidu est récupéré après centrifugation (15000 g, 30 min) et est lavé avec de l'eau désionisée (3 fois , 600 ml). Le pH est ajusté à 6 avec de l'acide acétique glacial et le résidu est lavé à l'éthanol à 95 % (3 fois, 500 ml) puis à l'acétone (3 fois, 500 ml) et est enfin séché à l'étuve ventilée à 40 °C pendant 16 h. Le résidu est alors broyé et tamisé (diamètre des particules < 0,5 mm).

### 1.1.1.5. Mode opératoire 5

Les sons sont mis en suspension (100 g / l) dans une solution d'hydroxyde de potassium, 1,5 mol / 1 pour le son de maïs et 2 mol / 1 pour le son de blé, à laquelle on ajoute de manière également connue 10 ml / 1 de peroxyde d'hydrogène 130 volumes. La suspension est laissée pendant 2 h à 100 °C avec une agitation manuelle périodique. Le résidu est récupéré après centrifugation (15000 g, 30 min) et est lavé avec de l'eau désionisée (3 fois , 600 ml). Le pH est ajusté à 6 avec de l'acide acétique glacial et le résidu est lavé à l'éthanol à 95 % (3 fois, 500 ml) puis à l'acétone (3 fois, 500 ml) et est enfin séché à l'étuve ventilée à 40 °C pendant 16 h. Le résidu est alors broyé et tamisé (diamètre des particules < 0,5 mm).

**Tableau I :**

| Traitements d'extraction des polymères non cellulosiques (hétéroxylanes et lignine) des sons de blé et de maïs. | | | |
|---|---|---|---|
| source de cellulose | échantillon | mode opératoire | traitement |
| son de blé | 1 | 1+2 | acide sulfurique puis chlorite de sodium |
| | 2 | 2+3 | chlorite de sodium puis hydroxyde de potassium |
| | 3 | 2+4 | chlorite de sodium puis hydroxyde de potassium + borohydrure de sodium |
| son de maïs | 4 | 4 | hydroxyde de potassium + borohydrure de sodium |
| | 5 | 5 | hydroxyde de potassium + peroxyde d'hydrogène |
| cellulose Avicel (Fluka) | 6 | - | cellulose commerciale |

Ces conditions conduisent à des échantillons possédant des caractéristiques pouvant être très différentes, quant à la composition et à la longueur des chaînes de cellulose (Tableau II)

**Tableau II :**

| Rendement (mg / g), composition (mg / g), degré de polymérisation moyen viscosimétrique (DPᵥ) et cristallinité (C) des échantillons de cellulose. | | | | | | | |
|---|---|---|---|---|---|---|---|
| échantillon | rendement | oses non cellulosiques | cellulose | cendres | lignine | DPᵥ | C |
| 1 | 217 | 134 | 581 | 1 | 132 | 270 | faible |
| 2 | 201 | 282 | 554 | 26 | 7 | 940 | faible |
| 3 | 208 | 299 | 587 | 25 | 6 | 1150 | faible |
| 4 | 224 | 279 | 603 | 29 | 7 | 1250 | faible |
| 5 | 157 | 184 | 729 | 13 | 8 | 720 | faible |
| 6 | - | trace | 974 | 0 | 0 | 210 | forte |
| oses non cellulosiques = hétéroxylanes (arabinose + xylose +galactose +acide glucuronique) + mannose + glucose non cellulosique. | | | | | | | |
| DPᵥ = degré de polymérisation moyen viscosimétrique déterminé de manière connue dans la cupriéthylènediamine à 25 °C. | | | | | | | |
| C (cristallinité) = déterminée par diffraction des rayons X (longueur d'onde sélectionnée λ_{Cu}K_{α1} = 0,15405) | | | | | | | |

### 1.2 Obtention des sulfo-acétates de cellulose

### 1.2.1 Optimisation des conditions d'obtention

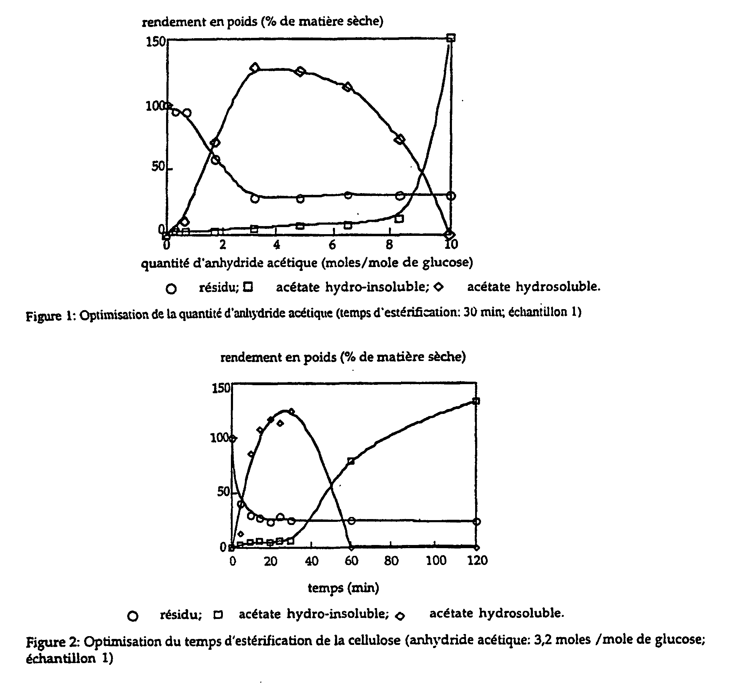

Les sulfo-acétates de cellulose sont obtenus selon le protocole décrit ci-après. Deux températures de réaction ont été testées 25 °C et 40 °C. A 25 °C, aucune réaction n'est observée. L'influence de la quantité d'anhydride acétique et de la durée de la réaction ont été étudiées à 40 °C (se reporter aux Figures 1 et 2).

Comme le montre la Figure 1, la quantité d'anhydride acétique ajoutée à un résidu cellulosique doit être comprise dans le domaine allant de 2 à 7 moles / mole d'anhydroglucose et, de préférence, environ 3,2 moles / mole d'anhydroglucose. Des quantités plus faibles d'anhydride acétique ne permettent pas l'estérification dans les conditions indiquées sur la Figure 1 (durée de 30 min et température de 40 °C) et des quantités plus élevées conduisent à la formation d'un triacétate de cellulose.

La Figure 2 montre que la durée de la réaction doit être inférieure à 1 h et de préférence d'environ 20 à 30 min dans les conditions indiquées sur la Figure 2 (température et quantité de réactif). Pour une durée de réaction supérieure ou égale à environ 1 h, l'estérification produit du triacétate de cellulose.

Les deux Figures illustrent la production d'un résidu d'estérification qui est riche en polymères non cellulosiques. Ce résidu n'est pas obtenu pour les celluloses d'une haute pureté.

### 1.2.1. Mode opératoire

Le matériel cellulosique, obtenu comme indiqué ci-dessus, est mis en suspension dans une solution d'acide acétique (50 g / l) puis laissé sous agitation magnétique pendant 15 min à température ambiante. Après centrifugation (2250 g, 10 min, 20 °C), le surnageant est éliminé. Cette étape est répétée deux fois.

La cellulose (50 g/l) est ensuite immergée à température ambiante dans une solution d'acide acétique et d'acide sulfurique (12 g/l), et l'ensemble est agité vigoureusement pendant 1 min à température ambiante.

L'anhydride acétique (3,2 moles par mole d'anhydroglucose) est ajouté et le mélange réactionnel est agité vigoureusement pendant 1 min, puis est placé sous agitation rotative à 40 °C, pendant 30 min.

La réaction est arrêtée par ajout d'une solution d'acide acétique à 70 %, afin de détruire l'excès d'anhydride acétique, et le mélange est agité pendant 30 min à température ambiante.

Après centrifugation (2250 g, 10 min, 35 °C), le surnageant est récupéré et le culot est lavé trois fois à l'acide acétique puis 3 fois à l'eau désionisée.

L'acide acétique et les eaux de lavages sont ajoutés au surnageant.

De l'eau désionisée (4 volumes) est placée dans un tube de centrifugation et la solution d'ester cellulosique est ajoutée lentement sous agitation magnétique. Le mélange est placé à 4°C pendant 16 h afin de faire précipiter les triacétates cellulosiques éventuellement formés.

Le surnageant est récupéré par centrifugation (17500 g, 20 min, 4 °C), puis neutralisé à pH 7,5 par addition lente d'hydroxyde de sodium à 4 mol /l.

Le mélange est refroidi dans un bain de glace et le pH est suivi en continu afin d'éviter toute saponification.

Le précipité obtenu est alors dialysé contre de l'eau désionisée jusqu'à ce que la conductivité des eaux de dialyse soit inférieure à 1 µS / cm.

### 1.3 Résultats

A 40°C, les quantités d'anhydride acétique peuvent varier de 3 à 7 moles / mole d'anhydroglucose lorsque la durée de la réaction est égale à 30 min. Les rendements sont optimum pour une durée d'environ 20 min à environ 30 min, lorsque la quantité d'anhydride acétique est de 3,2 moles / mole d'anhydroglucose.

L'influence de la quantité d'acide sulfurique n'a pas été testée. La quantité d'acide sulfurique influence probablement le taux de sulfatation et donc la solubilité dans l'eau. Par ailleurs des quantités d'acide sulfurique trop importantes peuvent provoquer une dépolymérisation de la cellulose et donc affecter les propriétés rhéologiques des dérivés obtenus.

Le rendement d'estérification est élevé mais dépend de la pureté de la cellulose (Tableau III). Il varie autour de 1,3 g / g pour les résidus cellulosiques obtenus à partir de sons de céréales - dont la teneur en cellulose est comprise entre 550 et 730 mg / g et atteint 1,7 g / g pour la cellulose commerciale.

Les degrés d'acétylation varient de 1,8 à 2,4 et le degré de sulfatation est en majorité de 0,3 (sauf pour l'échantillon 2, où il est égal à 0,4).

**Tableau III :**

| rendement d'estérification (g / g), teneur en cellulose (mg / g), degrés d'acétylation (DA) et de sulfatation (DS), viscosité intrinsèque (ml / g) et cristallinité des sulfo-acétates de cellulose conformes à l'invention en fonction de la cellulose de départ. | | | | | | |
|---|---|---|---|---|---|---|
| échantillon | rendement d'estérification | cellulose | DA | DS | [η] | cristallinité |
| 1 | 1,3 | 364 | 2,0 | 0,3 | nd | nulle |
| 2 | 1,2 | 408 | 2,4 | 0,4 | 1534 | nulle |
| 3 | 1,2 | 434 | 1,9 | 0,3 | 768 | nulle |
| 4 | 1,2 | 443 | 1,8 | 0,3 | 637 | nulle |
| 5 | 1,3 | 445 | 1,8 | 0,3 | 642 | nulle |
| 6 | 1,7 | 531 | 2,3 | 0,3 | 1470 | nulle |
| η = viscosité intrinsèque dans l'eau à 25 °C. Des mesures d'écoulement dans un tube capillaire de type Ubbelhode (diamètre : 0,52) ont été réalisés à différentes concentrations. La viscosité intrinsèque est alors déterminée par extrapolation à concentration nulle de la viscosité réduite. | | | | | | |
| nd = non mesurée. | | | | | | |

L'absence de dépolymérisation de la cellulose au cours de la réaction d'estérification a été mis en évidence pour l'échantillon 6 (Tableau III) : le degré de polymérisation du dérivé est donc le même que celui de la cellulose de départ. Celui-ci varie de 210 à 1250 pour les échantillons 1 à 6 (Tableau II) et il ne semble pas affecter les rendements d'estérification et les propriétés des dérivés cellulosiques.

### 1.4 Propriétés des sulfo-acétates de cellulose conformes à l'invention

La solubilité dans l'eau et les solvants polaires est liée à la présence des sulfates qui rendent les polymères suffisamment hydrophiles, comme déjà mentionné.

Par ailleurs, les acétyles confèrent aux dérivés de la présente invention ses propriétés associatives intéressantes : viscosité intrinsèque élevée et dépendante du degré d'acétylation (Tableau III). La viscosité intrinsèque élevée (650 - 1500 ml / g) et comparable à celle de la carboxyméthylcellulose implique des propriétés épaississantes potentiellement intéressantes.

### Exemple 2 : Obtention de gels thermoréversibles à base de sulfo-acétates de cellulose de l'invention.

Comme autres propriétés intéressantes conférées aux dérivés de l'invention par les groupements acétyles on peut citer la thixotropie et la gélification après traitement thermique.

La solubilisation doit se faire de préférence à chaud pour obtenir une solution limpide à une température d' 25 °C à 100 °C, mieux encore d'environ 80 °C. Pour une concentration de 20 mg / ml et après solubilisation à 80 °C et refroidissement lent, par exemple diminution de 1 °C / min pour atteindre 20 °C, un gel faible est obtenu, caractérisé par la valeur des modules G' et G"(respectivement modules de stockage et de perte) qui s'élèvent respectivement à 550 et 80 Pa à 1 rad / s et en appliquant une amplitude de déformation de 5 %. Ce gel est d'autant plus fort c'est à dire des valeurs de modules G' et G" plus élevées et l'écart entre les modules plus important, que la concentration est élevée et la descente en température lente. Pour des concentrations comprises entre 10 et 20 mg / ml, la solution obtenue est très visqueuse (G' compris entre 10 et 60 Pa à 1 rad / s et G" compris entre 0,5 et 5 Pa à 1 rad / s). Pour des concentrations inférieures à environ 10 mg / ml, on obtient une solution peu visqueuse.

### 2.1 Propriétés des gels de sulfo-acétate de cellulose

Les gels à base de sulfo-acétates de cellulose conformes à l'invention sont thermoréversibles (aucune perte des propriétés rhéologiques n'est observée après un traitement thermique) et partiellement thixotropes (la destruction du gel en appliquant un cisaillement n'est pas irréversible et après repos, il tend à retrouver son état initial).

Les traitements thermiques ne provoquent pas de dégradation de la liaison ester sulfurique. Il n'y a donc pas de libération d'acide sulfurique qui pourrait, au cours du temps, hydrolyser le polymère.

Au sens de la présente description, l'expression « acide acétique glacial » doit être comprise comme signifiant de l'acide acétique pur à 100%.

## Revendications

1. Procédé de préparation directe d'un mélange de dérivés sulfo-acétates de cellulose hydrosolubles par estérification d'un matériel cellulosique,
comprenant les étapes consistant à
(i) mettre en suspension le matériel cellulosique dans une solution d'acide acétique glacial, et éliminer l'excédent d'acide acétique;
(ii) mettre en suspension le matériel cellulosique gonflé d'acide acétique dans une solution d'acide sulfurique dans l'acide acétique glacial et
(iii) faire réagir le matériel cellulosique en ajoutant de l'anhydride acétique, **caractérisé en ce que** :
- la quantité d'anhydride acétique choisie est de 3 à 7 moles/mole d'anhydroglucose;
- le temps d'estérification est de 1 min. à 60 min.; et
- la température d'estérification est de 25°C à 80°C.

2. Procédé selon la revendication 1 **caractérisé en ce qu'**il comprend une étape (iv) au cours de laquelle la réaction de l'étape (iii) est stoppée par ajout d'une solution aqueuse d'acide acétique.

3. Procédé selon la revendication 2 **caractérisé en ce qu'**il comprend, les étapes consistant à
(v) centrifuger éventuellement le mélange de l'étape (iv) mentionnée ci-dessus ;
(vi) laver et éliminerle culot éventuellement obtenu ;
(vii) ajouter de l'eau afin de faire précipiter les triacétates de cellulose éventuellement formés ;
(viii) centrifuger et éliminer le culot ;
(ix) neutraliser le surnageant en refroidissant éventuellement ;
(x) dialyser le précipité obtenu et
(xi) lyophiliser la solution.

4. Procédé selon la revendication 3, **caractérisé en ce qu'**à l'étape (vi), le culot est lavé à trois reprises à l'acide acétique puis à trois reprises à l'eau désionisée.

5. Procédé selon la revendication 3 ou 4, **caractérisé en ce que**, à l'étape (vii), le mélange est placé à une température d'environ 4°C pendant une durée d'environ 16 h.

6. Procédé selon l'une quelconque des revendication 3 à 5, **caractérisé en ce que** l'étape (ix) est réalisée par addition lente d'une solution d'hydroxyde de sodium jusqu'à l'obtention d'un pH d'environ 7,5.

7. Procédé selon l'une quelconque des revendications 3 à 6, **caractérisé en ce que**, à l'étape (ix), le mélange est refroidi dans un bain de glace et le pH est suivi en continu de manière à ce que le pH ne dépasse pas 10.

8. Procédé selon la revendication 7, **caractérisé en ce que** le pH ne dépasse pas 7,5.

9. Procédé selon l'une quelconque des revendications précédentes **caractérisé en ce que** la quantité d'anhydride acétique choisie est de 3,2 moles /mole d'anhydroglucose.

10. Procédé selon l'une quelconque des revendications précédentes **caractérisé en ce que** le temps d'estérification choisi est de 20-30 min.

11. Procédé selon l'une quelconque des revendications précédentes **caractérisé en ce que** la température d'estérification choisie est de 40°C.

12. Procédé selon l'une quelconque des revendications précédentes **caractérisé en ce que** le matériel cellulosique de départ est choisi dans le groupe comprenant des résidus cellulosiques purifiés à partir de co-produits issus de l'agriculture.

13. Mélange de dérivés sulfo-acétates de cellulose hydrosolubles susceptible d'être obtenu par un procédé selon l'une quelconque des revendications précédentes **caractérisé en ce que** lesdits dérivés présentent un degré d'acétylation de 1,5 à 2,4.

14. Mélange de dérivés selon la revendication précédente **caractérisé en ce que** lesdits dérivés présentent un degré de sulfatation de 0,2 à 0,6.

15. Mélange de dérivés selon la revendication 14, **caractérisé en ce que** lesdits dérivés présentent un degré de sulfatation de 0.3.

16. Mélange de dérivés selon l'une des revendications 13 à 15 **caractérisé en ce que** seul est sulfaté le carbone en position 6 des cycles d'anhydroglucose desdits dérivés.

17. Mélange de dérivés selon l'une quelconque des revendications 13 à 16, **caractérisé en ce que** lesdits dérivés présentent un degré de polymérisation moyen viscosimétrique déterminé dans le cupriéthylènediamine à 25°C est de 210 à 1590.

18. Mélange de dérivés selon l'une quelconque des revendications 15 à 17, **caractérisé en ce que** la viscosité intrinsèque dudit mélange, déterminée par extrapolation à concentration nuelle de la viscosité réduite mesurée dans l'eau à 25°C est de 600 à 1500 ml / g.

19. Mélange selon l'une quelconque des revendications 13 à 18, **caractérisé en ce que** lesdits dérivés présentent des propriétés de rétention d'eau telles qu'en présence de sels ils gonflent, jusqu' 200 ml / g tout en restant insolubles.

20. Mélange selon l'une quelconque des revendications 13 à 19, **caractérisé en ce qu'**il est exempt de dérivés triacétylés.

21. Mélange selon l'une quelconque des revendications 13 à 20, **caractérisé en ce que** lesdits dérivés sont thermiquement stables pendant 16 h à 80°C.

22. Mélange selon l'une quelconque des revendications 13 à 21, **caractérisé en ce qu'**il se présente sous la forme d'un gel thermoréversible et partiellement thixotrope.

## Claims

1. Method for directly producing a blend of hydrosoluble cellulose sulfoacetate derivatives through esterification of a cellulose material, comprising the steps of:
(i) suspending the cellulose material in a glacial acetic acid solution and eliminating the excess acetic acid,
(ii) suspending the cellulose material swollen of acetic acid in a sulphuric acid solution in the glacial acetic acid, and
(iii) reacting the cellulose material by adding the acetic anhydride, **characterized in that**
- the selecting acetic anhydride quantity ranges form 3 to 7 moles/mole of anhydroglucose;
- the esterification time ranges from 1 to 60 minutes; and
- the esterification temperature ranges from 25 to 80°C.

2. Method according to claim 1. **characterized in that** it comprises a step (iv) during which the step (iii) reaction is stopped by adding an acetic acid aqueous solution.

3. Method according to claim 2, **characterized in that** it comprises the steps of
(v) optionally centrifuging the blend of the above-mentioned step (iv),
(vi) washing and eliminating the optionally obtained residue,
(vii) adding water in order to precipitate the optionally generated cellulose triacetates,
(viii) centrifuging and eliminating the residue,
(ix) neutralizing the supernatant by optional cooling,
(x) dialyzing the resulting precipitate, and
(xi) freeze-drying the solution.

4. Method according to claim 3, **characterized in that** at step (vi), the residue is washed three times with acetic acid, and then three times with deionized water.

5. Method according to claim 3 or 4, **characterized in that**, at the step (vii), the blend is put at a temperature of about 4°C for about 16 hours.

6. Method according to anyone of claims 3 to 5, **characterized in that** the step (ix) is carried out by a slow addition of a sodium hydroxide solution until a pH of about 7.5 is reached.

7. Method according to anyone of claims 3 to 6, **characterized in that** at the step (ix) the blend is cooled in an ice bath and the pH is continuously followed so that the pH does not exceed 10.

8. Method according to claim 7, **characterized in that** the pH does not exceed 7.5.

9. Method according to anyone of the preceding claims, **characterized in that** the selected acetic anhydride quantity is 3.2 moles/mole of anhydroglucose.

10. Method according to anyone of the preceding claims, **characterized in that** the selected esterification time ranges from 20 to 30 min.

11. Method according to anyone of the preceding claims, **characterized in that** the selecting esterification temperature is 40°C.

12. Method according to anyone of the preceding claims, **characterized in that** the starting cellulose material is selected in the group comprising cellulose residues purified from co-products derived from agriculture.

13. Blend of hydrosoluble cellulose sulfoacetate derivatives liable to be obtained by using a method according to anyone of the preceding claims, **characterized in that** said derivatives have an acetylation degree ranging from 1.5 to 2.4.

14. Derivative blend according to the preceding claim, **characterized in that** said derivatives have a sulphation degree ranging from 0,2 to 0.6.

15. Derivative blend according to claim 14, **characterized in that** said derivatives have a sulphation degree of 0.3.

16. Derivative blend according to one of claims 13 to 15, **characterized in that** only the carbon atom which is in position 6 of the anhydroglucose cycles of said derivatives is sulphated.

17. Derivative blend according to anyone of claims 13 to 16, **characterized in that** said derivatives have a viscosimetric mean polymerization degree determined in cupric ethylene diamine at 25°C ranging from 210 to 1 590.

18. Derivative blend according to anyone of claims 15 to 17, **characterized in that** said blend intrinsic viscosity determined by extrapolation at a nil concentration of the reduced viscosity measured in water at 25°C ranges from 600 to 1 500 ml/g.

19. Blend according to anyone of claims 13 to 18, **characterized in that** said derivatives have such water retention properties that in the presence of salts, they swell up to 200 ml/g while remaining insoluble.

20. Blend according to anyone of claims 13 to 19, **characterized in that** it is free from triacetylated derivatives.

21. Blend according to anyone of claims 13 to 20, **characterized in that** said derivatives are thermally stable for 16 hours at 80°C.

22. Blend according to anyone of claims 13 to 21, **characterized in that** it is as a thermoreversible and partially thixotropic gel.

## Patentansprüche

1. Verfahren zur direkten Herstellung eines Gemischs von wasserlöslichen Cellulosesulfoacetatderivaten durch Veresterung eines Cellulosematerials mit den folgenden Schritten:
(i) Suspendieren des Cellulosematerials in einer Eisessiglösung und Entfernen der überschüssigen Essigsäure;
(ii) Suspendieren des mit Essigsäure aufgequollenen Cellulosematerials in einer Lösung von Schwefelsäure in Eisessig; und
(iii) Umsetzen des Cellulosematerials durch Zugabe von Essigsäureanhydrid, **dadurch gekennzeichnet, dass**:
- die gewählte Menge an Essigsäureanhydrid 3 bis 7 mol pro Mol Anhydroglucose beträgt;
- die Veresterungszeit 1 min bis 60 min beträgt; und
- die Veresterungstemperatur 25 °C bis 80 °C beträgt.

2. Verfahren gemäß Anspruch 1, **dadurch gekennzeichnet, dass** es einen Schritt (iv) umfasst, bei dem die Reaktion von Schritt (iii) durch Zugabe einer wässrigen Essigsäurelösung abgebrochen wird.

3. Verfahren gemäß Anspruch 2, **dadurch gekennzeichnet, dass** es die folgenden Schritte umfasst:
(v) gegebenenfalls Zentrifugieren des Gemischs aus dem oben genannten Schritt (iv);
(vi) Waschen und Entfernen des gegebenenfalls erhaltenen Sediments;
(vii) Hinzufügen von Wasser zur Ausfällung der gegebenenfalls gebildeten Cellulosetriacetate;
(viii) Zentrifugieren und Entfernen des Sediments;
(ix) Neutralisieren des Überstandes, wobei man ihn gegebenenfalls abkühlt;
(x) Dialysieren des erhaltenen Niederschlags; und
(xi) Lyophilisieren der Lösung.

4. Verfahren gemäß Anspruch 3, **dadurch gekennzeichnet, dass** das Sediment in Schritt (vi) dreimal mit Essigsäure und dreimal mit entionisiertem Wasser gewaschen wird.

5. Verfahren gemäß Anspruch 3 oder 4, **dadurch gekennzeichnet, dass** das Gemisch in Schritt (vii) während ungefähr 16 h auf eine Temperatur von ungefähr 4 °C gebracht wird.

6. Verfahren gemäß einem der Ansprüche 3 bis 5, **dadurch gekennzeichnet, dass** Schritt (ix) durch langsame Zugabe von Natronlauge durchgeführt wird, bis man einen pH-Wert von ungefähr 7,5 erhält.

7. Verfahren gemäß einem der Ansprüche 3 bis 6, **dadurch gekennzeichnet, dass** das Gemisch in Schritt (ix) in einem Eisbad abgekühlt wird und der pH-Wert kontinuierlich überwacht wird, so dass der pH den Wert 10 nicht übersteigt.

8. Verfahren gemäß Anspruch 7, **dadurch gekennzeichnet, dass** der pH den Wert 7,5 nicht übersteigt.

9. Verfahren gemäß einem der vorstehenden Ansprüche, **dadurch gekennzeichnet, dass** die gewählte Menge an Essigsäureanhydrid 3,2 mol pro Mol Anhydroglucose beträgt.

10. Verfahren gemäß einem der vorstehenden Ansprüche, **dadurch gekennzeichnet, dass** die gewählte Veresterungszeit 20-30 min beträgt.

11. Verfahren gemäß einem der vorstehenden Ansprüche, **dadurch gekennzeichnet, dass** die gewählte Veresterungstemperatur 40 °C beträgt.

12. Verfahren gemäß einem der vorstehenden Ansprüche, **dadurch gekennzeichnet, dass** das Ausgangscellulosematerial aus der Gruppe gewählt wird, die aus Celluloserückständen besteht, die ausgehend von Nebenprodukten der Landwirtschaft gereinigt wurden.

13. Gemisch von wasserlöslichen Cellulosesulfoacetatderivaten, die durch ein Verfahren gemäß einem der vorstehenden Ansprüche erhalten werden können, **dadurch gekennzeichnet, dass** die Derivate einen Acetylierungsgrad von 1,5 bis 2,4 aufweisen.

14. Gemisch von Derivaten gemäß dem vorstehenden Anspruch, **dadurch gekennzeichnet, dass** die Derivate einen Sulfatierungsgrad von 0,2 bis 0,6 aufweisen.

15. Gemisch von Derivaten gemäß Anspruch 14, **dadurch gekennzeichnet, dass** die Derivate einen Sulfatierungsgrad von 0,3 aufweisen.

16. Gemisch von Derivaten gemäß einem der Ansprüche 13 bis 15, **dadurch gekennzeichnet, dass** nur der Kohlenstoff auf Position 6 der Anhydroglucoseringe der Derivate sulfatiert ist.

17. Gemisch von Derivaten gemäß einem der Ansprüche 13 bis 16, **dadurch gekennzeichnet, dass** die Derivate einen in Kupfer(II)-Ethylendiamin-Lösung bei 25 °C bestimmten viscosimetrischen mittleren Polymerisationsgrad von 210 bis 1590 aufweisen.

18. Gemisch von Derivaten gemäß einem der Ansprüche 15 bis 17, **dadurch gekennzeichnet, dass** die Grenzviskositätszahl des Gemischs, die durch Extrapolation der in Wasser bei 25 °C gemessenen Viskositätszahl auf eine Konzentration von Null bestimmt wird, 600 bis 1500 ml/g beträgt.

19. Gemisch gemäß einem der Ansprüche 13 bis 18, **dadurch gekennzeichnet, dass** die Derivate solche Wasserretentionseigenschaften aufweisen, dass sie in Gegenwart von Salzen bis auf 200 ml/g aufquellen, wobei sie unlöslich bleiben.

20. Gemisch gemäß einem der Ansprüche 13 bis 19, **dadurch gekennzeichnet, dass** es frei von triacetylierten Derivaten ist.

21. Gemisch gemäß einem der Ansprüche 13 bis 20, **dadurch gekennzeichnet, dass** die Derivate bei 80 °C während 16 h thermisch stabil sind.

22. Gemisch gemäß einem der Ansprüche 13 bis 21, **dadurch gekennzeichnet, dass** es in Form eines thermoreversiblen und partiell thixotropen Gels vorliegt.
